(19) Europäisches Patentamt
European Patent Office
Office européen des brevets

(11) **EP 2 052 814 B1**

(12) **EUROPEAN PATENT SPECIFICATION**

(45) Date of publication and mention
of the grant of the patent:
**11.09.2013 Bulletin 2013/37**

(51) Int Cl.:
***B24B 19/03*** (2006.01)    ***B24B 1/00*** (2006.01)

(21) Application number: **08006394.4**

(22) Date of filing: **04.04.2003**

(54) **Method for deciding a bevel curve, method for deciding a locus of a bevel, method for processing a lens and apparatus for processing a lens**

Verfahren zur Bestimmung einer Schliffkurve, Verfahren zur Bestimmung eines Schliffpunktes, Verfahren zur Bearbeitung einer Linse und Vorrichtung zur Bearbeitung einer Linse

Procédé pour décider d'une courbe latérale, procédé pour décider du locus d'un biseau, procédé de traitement de lentille et appareil de traitement de lentille

(84) Designated Contracting States:
**AT BE BG CH CY CZ DE DK EE ES FI FR GB GR HU IE IT LI LU MC NL PT RO SE SI SK TR**

(30) Priority: **08.04.2002   JP 2002105229**

(43) Date of publication of application:
**29.04.2009   Bulletin 2009/18**

(62) Document number(s) of the earlier application(s) in accordance with Art. 76 EPC:
**03007793.7 / 1 352 712**

(73) Proprietor: **Hoya Corporation**
**Tokyo 161-8525 (JP)**

(72) Inventors:
• **Jinbo, Masahiro**
  **Tokyo, 161-8525 (JP)**
• **Daimaru, Takashi**
  **Tokyo, 161-8525 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**EP-A- 0 432 078      EP-A- 0 479 683**
**EP-A- 0 899 059      EP-A- 0 953 405**
**US-A1- 2001 035 933**

## Description

Field of the Invention

The present invention relates to a method for deciding the locus of a bevel curve in a high power plus lens, and an apparatus for processing a high power plus lens which is used for conducting that method.

Prior Art

Heretofore, for processing an uncut lens into a shape fitting a shape of a lens frame of a spectacle frame, apparatuses for processing a lens have been used. As the apparatus for processing a lens, apparatuses having the so-called function of automatic beveled processing have also been provided. When a regular lens is used as the uncut lens in the processing using this type of the apparatus for processing a lens, after the information necessary for processing the uncut lens including data of the shape of the frame is provided to the apparatus, a locus of a bevel most suitable for the lens is automatically calculated by the apparatus and the bevel is formed along the obtained locus.

On the other hand, when a special lens is used as the uncut lens in the processing using this type of the apparatus for processing a lens, the position of the apex of the bevel and the bevel curve or the bevel ratio are manually set intentionally while the operator watches the display of simulation.

From EP 0 899 059 A2 there is known an eyeglass lens grinding machine wherein bevel calculations are performed to establish the bevel's apex at all points indicated by the radius vector such that the edge thickness is divided by a specific ratio. After the bevel calculations end, the operator can manually translate or tilt the bevel's aptical path to optimize the locus of the bevel curve.

From EP 0 479 683 A2 there is also known a lens grinding apparatus. The disclosed apparatus has an operation control unit for calculating, from a dividing ratio of a peripherial edge of the lens, a bevel curved surface and the bevel apex distances of the maximum thickness edge and from the minimum thickness edge. From a frame thickness, a minimum and a maximum distance from the front surface of the lens frame is determined. If the bevel apex position is outside of an allowable range, the operator can shift the bevel curved surface manually.

From US 2001/0035933 A1 there is known an apparatus for displaying lens contour, an apparatus for processing lens contour data, and apparatus for grinding edge of eyeglass lens with the same so that these apparatuses can grasp contours of the eyeglass frame and the eyeglass lens related to three dimensional virtual display (3D V-shaped simulation), and a V-shaped figure formed in an edge surface of lens in three dimensions to represent visually assembling of the virtual frame. These apparatuses comprises, an input means of lens rim contour data for inputting left/right lens rim contour data of an eyeglass frame in three dimensions; a calculating/determining circuit for calculating, based on the inputted lens rim contour data, an angle of inclination of lens rim contour of either left or right eye of the eyeglass frame to lens rim of the other eye; and a liquid crystal display panel for displaying a type of inclination of left/right lens rims of the eyeglass frame, based on the calculated results, as side view from upper or lower side of the eyeglass frame.

Object to be solved by the invention

However, the manual setting of the locus of a bevel depends on the skill and the experience of the operator to a great degree. Therefore, it is difficult that the bevel is formed at a suitable position without a skilled operator.

In particular, it is difficult that the most suitable bevel is formed with an excellent balance in special lenses such as a high power plus lens. Occasionally, when the completed lens is fitted into a lens frame, peripheral edges of the lens protrudes unevenly from the rim and the appearance of the entire spectacle glass becomes poor.

In recent years, the number of the skilled operator is decreasing. Under these circumstances, technology which enables formation of a suitable bevel in special lenses even by a person not skilled in the art has been desired.

The present invention has an object of enabling formation of a suitable bevel in a high power plus lens even by a person not skilled in the art.

The object of the invention is attained by a method according to claim 1 and by an apparatus for processing a high power plus lens according to claim 3. Further developments of the invention are specified in the dependent claims.

Brief description of drawings

Fig. 1    shows a block diagram schematically exhibiting the function of the apparatus for processing a lens as an embodiment of the present invention;

Fig. 2    shows a perspective diagram schematically exhibiting the construction at the inside of the apparatus for processing a lens as an embodiment of the present invention;

Fig. 3    shows a diagram exhibiting the construction around the lens-measuring portion of the apparatus for processing a lens as an embodiment of the present invention;

Fig. 4    shows a flow chart describing the working of the apparatus for processing a lens as an embodiment of the present invention, as long as it concerns a high power plus lens.

Fig. 5    shows a flow chart describing the method for deciding the locus of the bevel of an EX lens, not covered by the invention;

Fig. 6    shows a flow chart describing the method for deciding the locus of the bevel of a high power minus lens, not covered by the invention;

Fig. 7    shows a flow chart describing the method for deciding the locus of the bevel of a lenticular lens, not covered by the invention;

Fig. 8    shows a flow chart describing the method for deciding the locus of the bevel of a plus-power lens;

Fig. 9    shows a diagram exhibiting an example of the display in the display portion of the apparatus for processing a lens as an embodiment of the present invention, whereas the example for an EX lens is not covered by the invention;

Fig. 10    shows a diagram describing the method for deciding the locus of the bevel of an EX lens, not covered by the invention;

Fig. 11    shows a diagram describing the method for deciding the locus of the bevel of a high power minus lens, not covered by the invention;

Fig. 12    shows a diagram describing the method for deciding the locus of the bevel of a lenticular lens, not covered by the invention; and

Fig. 13    shows a diagram describing the method for deciding the locus of the bevel of a high power plus lens.

Preferred Embodiments of the Invention

It is to be noted that the processing of other special lenses than a high power plus lens is not part of the claimed invention but serves for a better understanding of the claimed invention.

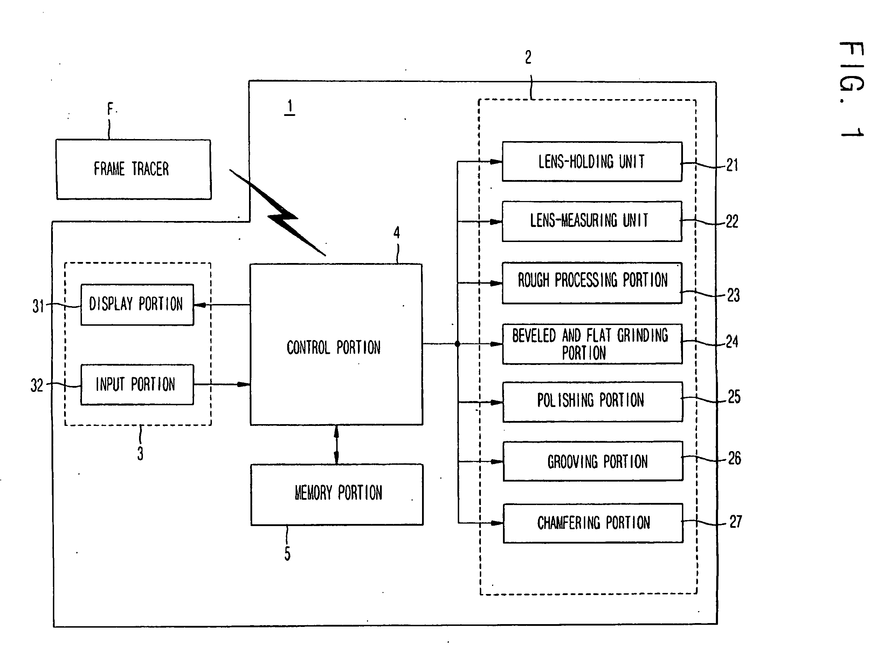

Fig. 1 shows a block diagram schematically exhibiting the function of the apparatus for processing a lens as an embodiment of the present invention. The apparatus for processing a lens 1 comprises a lens-processing portion 2 in which an uncut lens is processed to provide a shape fitting the lens frame of the spectacle frame, an operation panel 3, a control portion 4 and a memory portion 5.

The lens-processing portion 2 comprises a lens-holding unit 21, a lens-measuring portion 22, a rough processing portion 23, a beveled and flat grinding portion 24, a polishing portion 25, a grooving portion 26 and a chamfering portion 27.

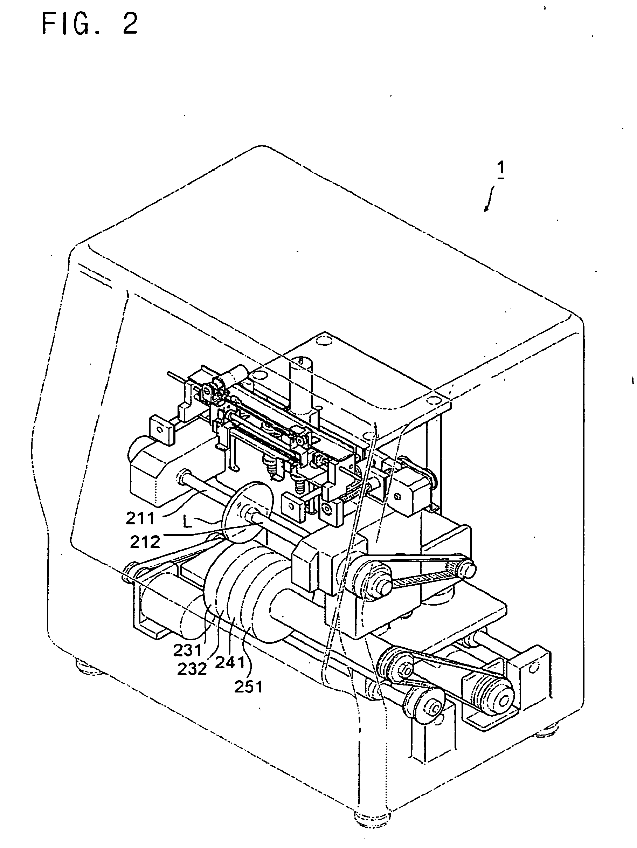

The lens-holding unit 21 comprises, as shown in Fig. 2, a pair of lens-holding shafts 211 and 212 extending in the direction of the light axis of an uncut lens L. The uncut lens is held between the two lens-holding shafts 211 and 212 at both faces of the uncut lens L. The uncut lens L is rotated around the lens center by the lens-holding shafts so that the position of the processing and the position of the measurement in the circumferential direction are moved. Due to this construction, procedures from the measurement to the processing can be conducted in a singe chuck operation without releasing chucking after the uncut lens L is held by the lens-holding unit 21.

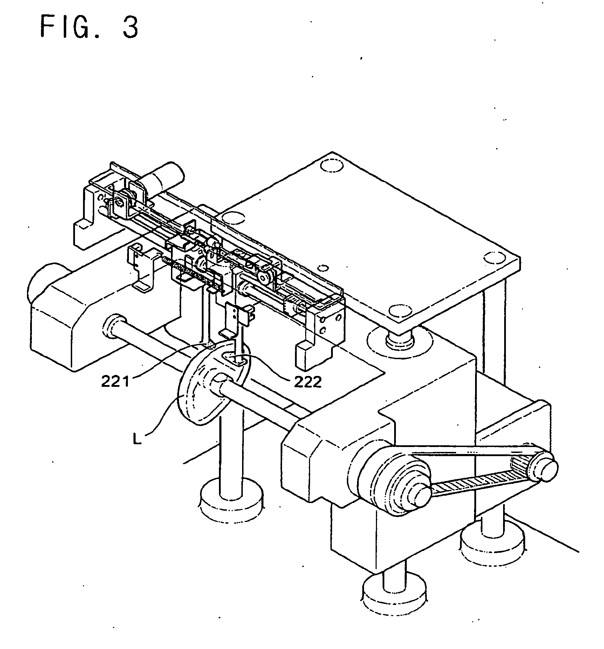

The lens-measuring portion 22 comprises, as shown in Fig. 3, a pair of styluses 221 and 222 which are disposed at opposite sides of the uncut lens L and face to each other. By bringing the styluses 221 and 222 into contact with the concave face and the convex face, respectively, of the uncut lens L, the position of the contact (the position of the face of the lens) and the thickness of the lens at the position of the contact are measured.

The rough processing portion 23 comprises, as shown in Fig. 2, a rough grinder for a plastic lens 231 and a rough grinder for a glass lens 232.

The bevel and flat grinding portion 24 comprises a grinder for beveled processing and flat processing 241 which comprises a beveled grinding portion having a groove corresponding to the bevel on the grinding face and a flat grinding portion having a flat grinding face.

The polishing portion 25 comprises a polishing grinder 251.

These grinders 231, 232, 241 and 251 are disposed at the same rotating shaft. The uncut lens L held by the lens-holding unit 21 is pressed against one of these grinders which are rotated by the rotation of the rotating shaft and the processing is conducted in accordance with the selected grinder.

The grooving portion 26 comprises a grooving tool having an end mill although the grooving tool is not shown in the Fig.. The peripheral face of the lens L which has been processed to a prescribed peripheral shape is cut into the prescribed depth by the end mill while the lens L is continuously rotated and a groove can be formed.

The chamfering portion 27 comprises a chamfering tool having a grinding portion having an approximately hemispherical shape although the chamfering tool is not shown in the Fig.. The edge at the boundary of the peripheral face and the face of the lens L which has been processed by the flat grinding or the beveled grinding is ground by the grinding portion having the approximately hemispherical shape while the lens L is continuously rotated and the chamfering can be conducted.

The operation panel 3 comprises a display portion 31 for displaying an estimated shape of the lens to be obtained after the processing and various values set for the processing and an input portion 32 for inputting information necessary for processing the uncut lens L and for directing a desired processing.

The control portion 4 comprises CPU and other devices and controls operations of the apparatus for processing a lens 1 by execution of the control program stored in the memory portion 5.

The memory portion 4 comprises ROM, RAM and other devices and memorizes the control program of the apparatus for processing a lens 1, data of the image of the lens and other information.

In Fig. 1, the mark F indicates a frame tracer which is attached at the outside of the apparatus for processing a lens 1 and can communicate with the apparatus. The frame tracer F measures the desired spectacle frame set at the frame tracer and transfers data of the shape of the lens frame expressing the three-dimensional shape of the lens frame to the apparatus for processing a lens 1. Therefore, the apparatus for processing a lens 1 is equipped with an interface of communication therefor. Although the frame tracer F is not a component constituting the apparatus for processing a lens 1 in the Fig., the apparatus for processing a lens 1 may have the frame tracer F as a constituting component.

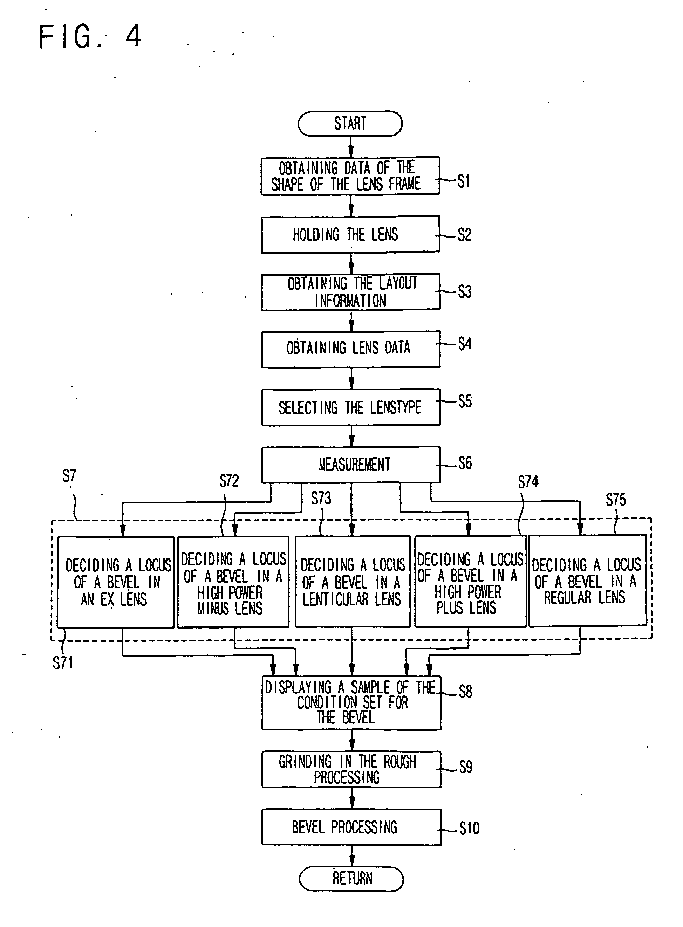

The working of the apparatus for processing a lens will be described in the following with reference to Fig. 4.

[S1] Data of the shape of the lens frame of the spectacle frame is obtained from the frame tracer F.

[S2] The operator sets the uncut lens L at the lens-holding unit 21 and the holding of the lens is directed using the input portion 342. By this operation, the uncut lens L is held by the lens-holding unit 21 in a chucked condition. When the uncut lens L is held, the optical center of the uncut lens L is placed in the axial direction of the lens-holding shafts 221 and 222 of the lens-holding unit 21.

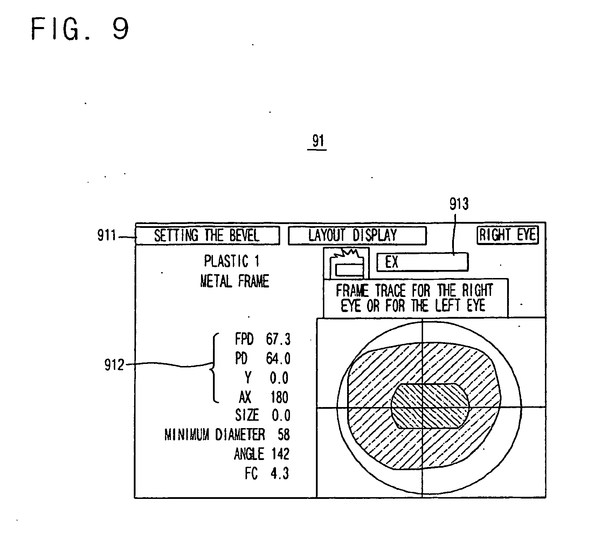

[S3] At this time, a layout display 91 such as that shown in Fig. 9 is displayed in the display portion 31. In the layout display 91, using the input portion 32, the operator indicates whether the lens to be processed is a lens for the right eye or for the left eye and also indicates in a column 911 that the type of the processing is the bevel processing. The operator inputs the data of prescription for the person wearing the spectacle glasses and information of the layout including data of the distance between geometrical centers into a column 912 using the input portion 32. When these operations have been conducted, the control portion 3 obtains the data of the shape of processing expressing the shape of the lens formed after the rough grinding of the uncut lens L by the calculation based on the input data.

At this time, the operator may indicate the chamfering and/or the grooving as an option for the finishing using the input portion 32.

Examples of the data of prescription include the pupillary distance (PD), information on the eye point including the height of the eye point relative to the geometrical center of the frame and data expressing the cylinder axis (AX). Examples of the data of the distance between geometrical centers include the frame PD (FPD) expressing the distance between the geometrical centers of the lens frames and the distance between lenses (DBL) expressing the distance between lenses (so-called the nose width).

[S4] The operator then inputs the lens data of the uncut lens using the input portion 32.

Examples of the lens data include the value of a curve or the value of a curve for every axial direction of the convex face of the uncut lens, the value of a curve or the value of a curve for every axial direction of the concave face of the uncut lens, the thickness of the center (the optical center or the geometrical center) of the uncut lens, the diameter of the lens (including A size and B size), the shape of the lens (the shape of the near optical center) and the distance between the optical center and the geometrical center.

The above values of a curve may be approximate values. As the lens data, all these data are not always necessary. The necessary data may be selected and included.

The lens data may be provided to the apparatus for processing a lens I not by the manual input by the operator but through a data communication.

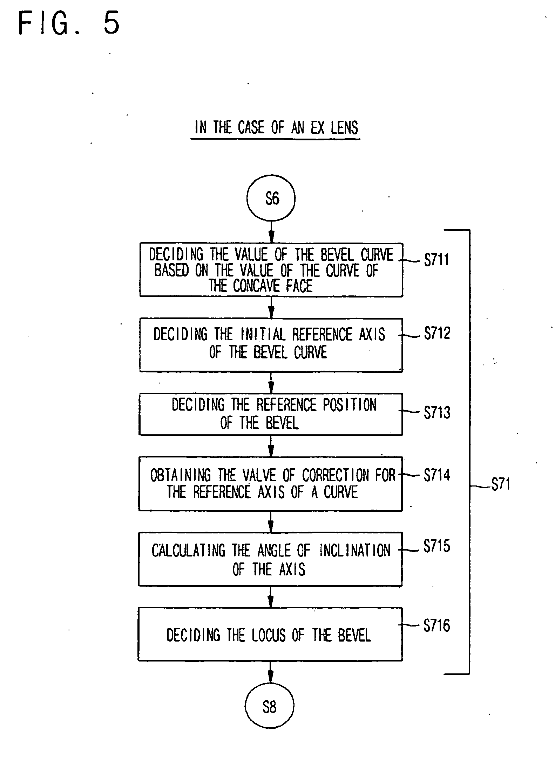

[S5] The operator then indicates the lens type of the uncut lens L in column 913 of the input display 91 using the input portion 32. More specifically, the input portion 32 has a button for selection of the lens type and any one of EX, minus- power, lenticular, plus- power and regular lenses can be selected as the lens type by pushing the button for selection of the lens type. In Fig. 5, the EX lens is selected as an example.

By indication of the lens type of the uncut lens by the operator using the input portion 32 as shown in the above, the control portion 4 obtains the information of the lens type expressing the lens type (the step of obtaining the information of the lens type). The information of the lens type may be provided to the apparatus for processing a lens 1 not by the manual input by the operator but from the outside by another means such as communication.

The high power minus lens and the high power plus lens mean lenses having the maximum thickness of the peripheral edge of about 5 mm or greater after the lens is processed. Since the size of the protruded portion is great in these lenses when the lenses are fitted into frames, it is desired that the bevel is formed at a suitable position.

[S6] The operator then pushes the starting switch of the input portion 32. The control portion 3 directs measuring the shape of the uncut lens L based on the data of the shape of processing obtained in step S3. The styluses 221 and 222 are moved relative to the uncut lens L held by the holding shaft 211 and 212 in a manner such that the positions of contact of the styluses 221 and 222 on both faces of the uncut lens form loci about the same as that of the position of the peripheral edge of the lens after the processing and the positions of the contact (the positions on the faces of the lens) and the thickness of the lens at the positions of the contact are measured.

[S7] The control portion 4 calculates the locus of the bevel in accordance with the lens type based on the information of the lens type obtained in S5 (the step of calculating the locus of a bevel) and creates the data of the locus of the bevel ( data of the automatically set bevel curve) .

Step S7 is conducted specifically for each lens type selected from "EX" (step S71), "high power minus" (step S72), "lenticular" (step S73), "high power plus" (step S74) and "regular" (step S75). The step specific for each lens type will be described later more specifically. When "regular" is selected (step S75), more specific description will be omitted since the procedures are well known.

[S8] The control portion 4 directs displaying a sample of the condition set for the bevel in the display portion 31 based on the data of the locus of the bevel obtained by the calculation. The operator can modify or adjust the condition of the automatically set bevel (including the position and the angle of the bevel) using the input portion 32. When such a modification is made, the data of the locus of the bevel is modified.

[S9] The operator directs starting the processing using the input portion 32. When the control portion 4 detects the direction of starting the processing, the control portion 4 obtains the data of the rough processing based on the data of the shape of processing obtained in S3. The data of the rough processing include data showing margins for grinding in the rough processing. The control portion 4 then controls the lens- processing portion 2 so that the rough processing of the uncut lens is conducted in accordance with the obtained data of the rough processing. The peripheral portion of the uncut lens L is ground by the rough grinder for a plastic lens 231 or the rough grinder for a glass lens 232.

[S10] The control portion 4 then obtains data of the bevel processing based on the data of the locus of the bevel obtained in step S7 (the modified data of the locus of the bevel when the data have been modified in step S8) and the data of the shape of processing obtained in step S3. The control portion 4 forms the bevel based on the data of the bevel processing thus obtained. In this manner, the peripheral edge of the roughly processed lens is processed and the bevel is formed by the finishing grinder of the grinder for beveled processing and flat processing 241 and the bevel groove formed on the finishing grinder.

When the lens for the right eye is obtained in accordance with the above steps, the operation returns to step 2. The uncut lens for the lens for the left eye is held by chucking and the lens for the left eye is obtained in accordance with the same procedures.

Step S7 will be described more specifically in the following.

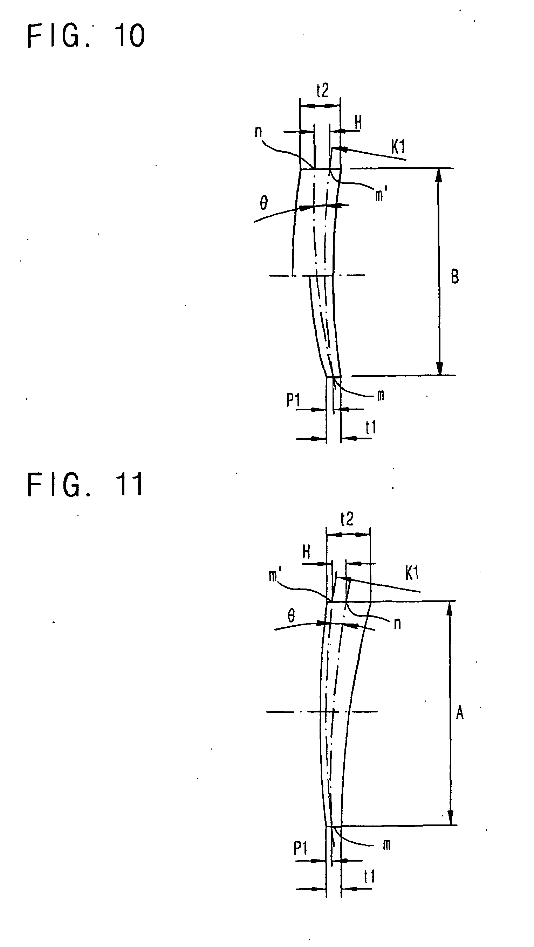

In the case where an EX lens is indicated (step S71), the procedures will be described in accordance with the flow chart shown in Fig. 5 with reference to the diagram shown in Fig. 10.

[S711] The value of the bevel curve K1 is decided based on the value of the curve of the concave face of the EX lens contained in the lens data obtained in step S4 described above (the step of deciding the value of the bevel curve) . Specifically, the calculation is different depending on whether the EX lens is a minus- power lens or a plus- power lens. The value of the bevel curve K1 is obtained in accordance with one of the following equations:

In the case of a plus-power lens:

$$K1 = \text{average value of the curve at the concave side} \times \text{adjusting coefficient } e_+$$

In the case of a minus-power lens:

$$K1 = \text{average value of the curve at the concave side} \times \text{adjusting coefficient } e_-$$

In the above equations, $e_+$ represents a number of 1 or greater and $e_-$ represents a number of 1 or smaller.

When the refractive index of the lens material is 1.523, the obtained value of the bevel curve K1 and the radius of curvature of the bevel curve **r1** satisfy the following equation:

$$K1 \fallingdotseq 523/r1$$

wherein the refractive index of the air is set at 1.0.

[S712] In the above calculation, the reference axis of the bevel curve (hereinafter, referred to as the initial reference axis of the bevel curve) is decided in the same direction as the direction of the curvature of the concave face of the EX lens (the step of deciding the initial reference axis of the bevel curve).

[S713] The first reference position m on the peripheral edge in the portion having the minimum thickness at the lower side in the vertical direction of the EX lens (the reference position of the bevel) is decided based on the thickness **t1** of the portion having the minimum thickness (the step of deciding the first reference position). In this step, the first reference position **m** is expressed by the distance **P1** from the end of the peripheral edge at the side of the convex face in the portion having the minimum thickness to the first reference position **m**. Specifically, **P1** is different depending on the thickness **t1** of the portion having the minimum thickness and decided as shown in the following:

When t1=2.4 mm or smaller, P1=t1/2
When t1=2.4-4.0 mm, P1=1.2
When t1=4.0 mm or greater, P1=3×t1/10

[S714] The second reference position n on the peripheral edge in the portion having the maximum thickness at the upper side in the vertical direction of the EX lens is decided based on the ratio (**t2/t1**) of the thickness **t2** of the portion having the maximum thickness to the thickness **t1** of the portion having the minimum thickness (the step of deciding the second reference position). The second reference position **n** is expressed by the distance H from the position **m'** corresponding to the first reference position on the peripheral edge in the portion having the maximum thickness to the second reference position **n** (hereinafter, the distance H being referred to as the value of correction for the reference axis of a curve). Specifically, the value of correction for the reference axis of a curve H is obtained in accordance with the following equation:

$$H = a \times (t2/t1) \times (t1-P1)-(t1-P1)$$

wherein a represents an adjusting coefficient. (t2/t1) is 1 or greater. When ax (t2/t1) is 1 or smaller, always a× (t2/t1) =1.

[S715] The angle of inclination θ of the axis from the direction of the initial reference axis of the bevel curve is calculated based on the value of correction for the reference axis of a curve H and the B size (the vertical axis of the lens shape) B contained in the lens data (the step of calculating the angle of inclination of the axis). Specifically, the angle of inclination of the axis is calculated in accordance with the following equation:

$$\theta = \arctan (H/A)$$

[S716] The locus of the bevel is decided based on the value of the bevel curve K1, the first reference position m and the angle of inclination of the axis θ (the step of deciding the locus of the bevel). Specifically, the locus of the bevel which has the value of the bevel curve K1 and an axis obtained by inclination of the initial reference axis of the bevel curve by the angle θ in the anti-clockwise direction in Fig. 10 as the reference axis of the curve, is decided. The decided locus of the bevel has the value of the bevel curve K1 and passes through the first reference position **m** and the second reference position **n.**

In accordance with the above procedures, a suitable locus of the bevel having an excellent balance can be obtained without marked protrusion of the front face of the EX lens from the rim when the EX lens is fitted into the frame.

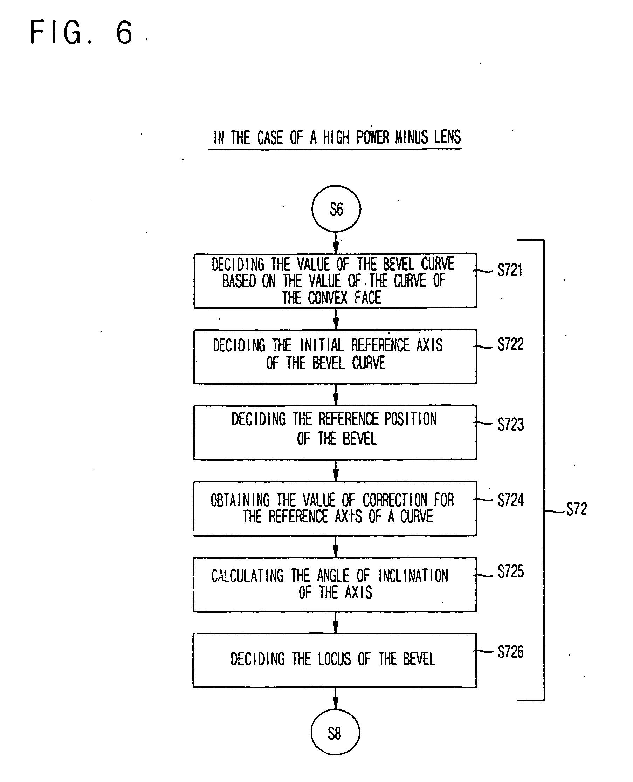

In the case where a high power minus lens is indicated (step S72), the procedures will be described in accordance with the flow chart shown in Fig. 6 with reference to the diagram shown in Fig. 11.

[S721] The value of the bevel curve K1 is decided based on the value of the curve of the convex face of the high power minus lens contained in the lens data obtained in step S4 described above (the step of deciding the value of the bevel curve). Specifically, the calculation is different depending on the value of the curve C of the convex face of the high power minus lens. The value of the bevel curve K1 is obtained in accordance with one of the following equations:

When the value of the curve C of the convex face is 2.0 or smaller,
K1=3.0
When the value of the curve C of the convex face is 2.0~4.0,
K1= (C- 2.0) / 2+3.0
When the value of the curve C of the convex face is 4.0~7.0,
K1=C
When the value of the curve C of the convex face is 7.0 or greater,
K1=7.0

When the refractive index of the lens material is 1.523, the obtained value of a bevel curve K1 and the radius of curvature of the curve r1 satisfy the following equation:

$$K1 = 523/r1$$

wherein the refractive index of the air is set at 1.0.

[S722] In the above calculation, the reference axis of the bevel curve (hereinafter, referred to as the initial reference axis of the bevel curve) is decided in the same direction as the direction of the curvature of the convex face of the high power minus lens (the step of deciding the initial reference axis of the bevel curve) .

[S723] The first reference position m on the peripheral edge in the portion having the minimum thickness at the side of the nose of the person wearing the high power minus lens (the reference position of the bevel) is decided based on the thickness **t1** of the portion having the minimum thickness (the step of deciding the first reference position) . In this step, the first reference position **m** is expressed by the distance P1 from the end of the peripheral edge at the side of the convex face in the portion having the minimum thickness to the first reference position **m.** Specifically, P1 is different depending on the thickness t1 of the portion having the minimum thickness and decided as shown in the following:

When t1=2.4 mm or smaller, P1=t1/2
When t1=2.4-4.0 mm, P1=1.2
When tl=4.0 mm or greater, P1=3×t1/10

[S724] The second reference position **n** on the peripheral edge in the portion having the maximum thickness is decided based on the ratio (t2/t1) of the thickness t2 of the portion of the high power minus lens having the maximum thickness of the high power minus lens at the side of the ear of the person wearing the high power minus lens to the thickness t1 of the portion having the minimum thickness (the step of deciding the second reference position) . The second reference position **n** is expressed by the distance H from the position **m'** corresponding to the first reference position on the peripheral edge in the portion having the maximum thickness to the second reference position **n** (hereinafter, referred to as the value of correction for the reference axis of a curve) . Specifically, the value of correction for the reference axis of a curve H is obtained in accordance with the following equation:

$$H = P1 \times a \times (t2/t1) - P1 \qquad \text{for } a \times (t2/t1) > 1,$$

and

$$H = 0 \qquad \text{for for } a \times (t2/t1) \le 1,$$

wherein a represents an adjusting coefficient and (t2/t1) is 1 or greater.

[S725] The angle of inclination θ of the axis from the direction of the initial reference axis of the bevel curve is calculated based on the value of correction for the reference axis of a curve H and the A size (the horizontal axis of the lens shape) A contained in the lens data (the step of calculating the angle of inclination of the axis) . Specifically, the angle of inclination of the axis is calculated in accordance with the following equation:

$$\theta = \arctan (H/A)$$

[S726] The locus of the bevel is decided based on the value of the bevel curve K1, the first reference position **m** and the angle of inclination of the axis $\theta$ (the step of deciding the locus of the bevel) . Specifically, the locus of the bevel which has the value of the bevel curve K1 and an axis obtained by inclination of the initial reference axis of the bevel curve by an angle $\theta$ in the clockwise direction in Fig. 11 as the reference axis of the curve the axis, is decided. The decided locus of the bevel has the value of the bevel curve K1 and passes through the first reference position **m** and the second reference position **n.**

In accordance with the above procedures, a suitable locus of the bevel having an excellent balance can be obtained without marked protrusion of the back face of the high power minus lens from the rim when the high power minus lens is fitted into the frame.

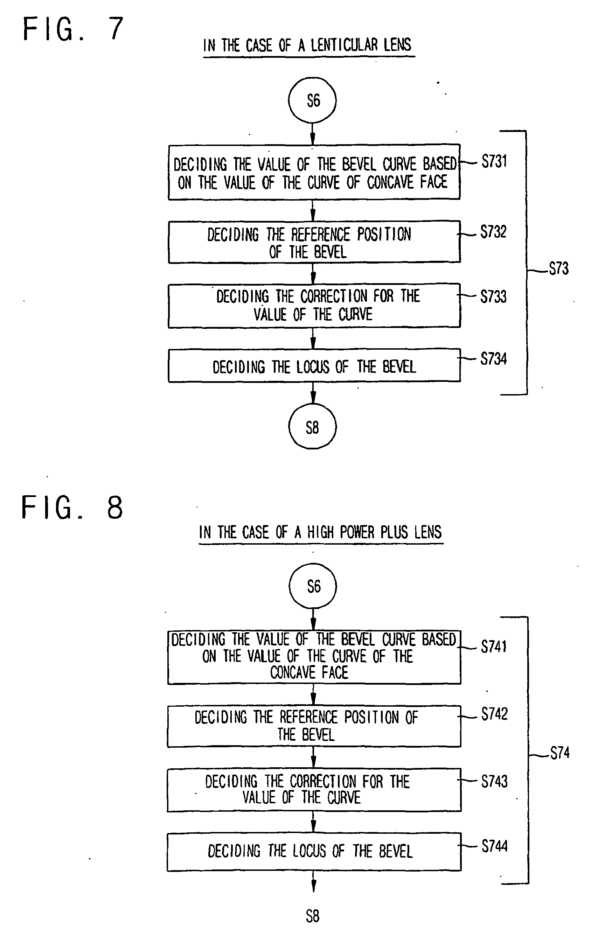

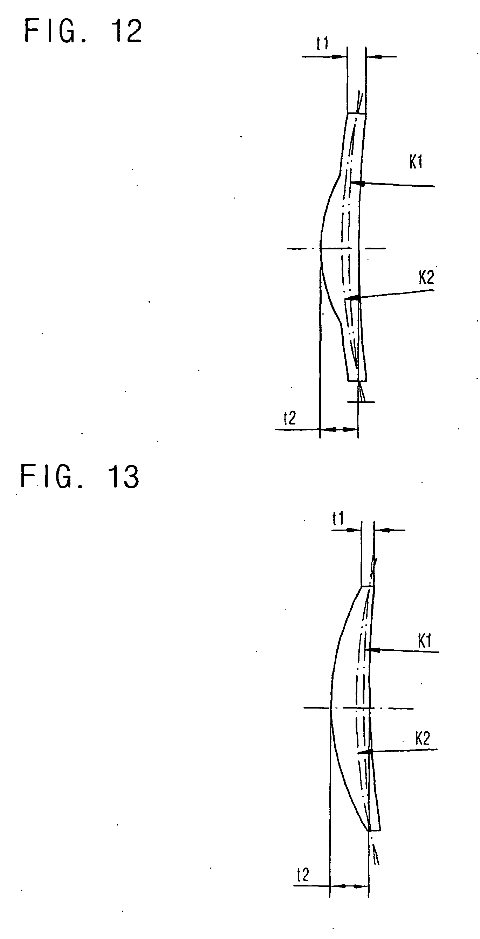

In the case where a lenticular lens is indicated (step S73), the procedures will be described in accordance with the flow chart shown in Fig. 7 with reference to the diagram shown in Fig. 12.

[S731] The value of the bevel curve K1 is decided based on the value of the curve of the concave face of the lenticular lens contained in the lens data obtained in step S4 described above (the step of deciding the value of the bevel curve) . Specifically, the value of the bevel curve K1 is obtained in accordance with the following equation:

$$K1 = \text{average value of the curve at the concave side} \times$$

$$\text{adjusting coefficient } e$$

In the above equations, e represents a number of I or greater.

When the refractive index of the lens material is 1.523, the obtained value of the bevel curve K1 and the radius of curvature of the curve r1 satisfy the following equation:

$$K1 \fallingdotseq 523/r1$$

wherein the refractive index of the air is set at 1.0.

[S732] The reference position of the bevel **m** on the peripheral edge in the portion having the minimum thickness at the side of the nose or the ear of the person wearing the lenticular lens is decided based on the thickness t1 of the portion having the minimum thickness (the step of deciding the first reference position) . In this step, the reference position of the bevel **m** is expressed by the distance P1 from the end of the peripheral edge at the side of the convex face in the portion having the minimum thickness to the first reference position m. Specifically, P1 is different depending on the thickness t1 of the portion having the minimum thickness and decided as shown in the following:

When t1=2.4 mm or smaller, P1=t1/2
When t1=2.4~4.0 mm, P1=1.2
When t1=4.0 mm or greater, P1=3×t1/10

[S733] The correction for the value of the curve S is decided based on the ratio (t2/t1) between the thickness t1 of the portion of the lenticular lens having the minimum thickness at the side of the nose or the ear of the person wearing the lenticular lens and the thickness t2 of the portion having the maximum thickness in the vertical direction of the lenticular lens (the step of deciding the correction for the value of the curve) . Specifically, the correction for the value of the curve S is obtained in accordance with the following equation:

$$S = a \times(t2/t1)-1 \qquad \text{for } a \times(t2/t1) > 1,$$

and

$$S = 0 \qquad \text{for } a \times(t2/t1) \leq 1,$$

wherein a represents an adjusting coefficient and (t2/t1) is 1 or greater.

[S734] The locus of the bevel which has the value of the curve K2 (=S+K1) obtained by adding the correction for the value of the curve S to the value of the bevel curve K1 and passes through the reference position of the bevel **m**, is decided (the step of deciding the locus of the bevel).

In accordance with the above procedures, a suitable locus of the bevel having an excellent balance can be obtained without marked protrusion of the segment in front of the lens when the lenticular lens is fitted into the frame.

In the case where a power lens is indicated (step S74), the procedures will be described in accordance with the flow chart shown in Fig. 8 with reference to the diagram shown in Fig. 13.

[S741] The value of the bevel curve **K1** is decided based on the value of the curve of the concave face of the high power plus lens contained in the lens data obtained in the above (the step of deciding the value of the bevel curve). Specifically, the value of the bevel curve K1 is obtained in accordance with the following equation:

$$\mathrm{K1 = average\ value\ of\ the\ curve\ at\ the\ concave\ side\ \times}$$

$$\mathrm{adjusting\ coefficient\ e}$$

In the above equations, e represents a number of 1 or greater.

When the refractive index of the lens material is 1.523, the obtained value of the bevel curve K1 and the radius of curvature of the curve r1 satisfy the following equation:

$$\mathrm{K1 \fallingdotseq 523/r1}$$

wherein the refractive index of the air is set at 1.0.

[S742] The reference position of the bevel **m** on the peripheral edge in the portion having the minimum thickness of the high power plus lens is decided based on the thickness t1 of the portion having the minimum thickness (the step of deciding the first reference position). In this step, the reference position of the bevel m is expressed by the distance P1 from the end of the peripheral edge at the side of the convex face in the portion having the minimum thickness to the first reference position **m**. Specifically, P1 is different depending on the thickness t1 of the portion having the minimum thickness and decided as shown in the following:

When t1=2.4 mm or smaller, P1=**t**1/2
When t1=2.4-4.0 mm, P1=1.2
When t1=4.0 mm or greater, P1=3×t1/10

[S743] The correction for the value of the curve S is decided based on the ratio (C2/C1) of the value of the curve C1 of the concave face to the value of the curve C2 of the convex face of the high power plus lens or based on the value of the curve C2 of the convex face alone (the step of deciding the correction for the value of the curve). Specifically, the correction for the value of the curve S is obtained in accordance with the following equation:

$$S = a \times (C2/C1)\text{-}1 \qquad\qquad \mathrm{for}\ a\times(C2/C1) > 1$$

$$S = 0 \qquad\qquad \mathrm{for}\ a\times(C2/C1) \leq 1$$

wherein a represents an adjusting coefficient and (C2/C1) is 1 or greater

[S744] The locus of the bevel which has the value of the curve K2 (=S+K1) obtained by adding the correction for the value of the curve S to the value of the bevel curve K1 and passes through the reference position of the bevel **m**, is decided (the step of deciding the locus of the bevel).

In accordance with the above procedures, a suitable locus of the bevel having an excellent balance can be obtained without marked protrusion of the convex face of the high power plus lens in front of the lens when the high power plus lens is fitted into the frame.

Incidentally "an EX lens" is well known to a person skilled in the arts and sometimes called "an E line multifocal lens"

In accordance with the present invention, the locus of the bevel which has heretofore been obtained by the skill and the experience of a skilled operator can be obtained in accordance with the prescribed procedures. Therefore, the suitable bevel can be formed even by a person not skilled in the art.

List of reference numbers

**[0084]**

1: An apparatus for processing a lens;
2: a lens-processing portion (a means for the beveled processing);
31: a display portion;
32: an input portion;
4: a control portion; and
5: a memory portion.

**Claims**

1. A method for deciding a locus of a bevel in a high power plus lens comprising the steps of:

   a) deciding a value (K1) of the bevel curve based on a first value of a curve of a concave face of the high power plus lens according to the following equation:

$$K1 = \overline{\kappa} \cdot e,$$

   wherein $\overline{\kappa}$ is the average value of the curve at the concave side of the high power plus lens and the adjusting coefficient e represents a number of l or greater;
   b) deciding a reference position (m) of the bevel on a peripheral edge in a portion of the high power plus lens having a minimum thickness (t1 based on the thickness of the portion of the high power plus lens having the minimum thickness (t1);
   c) deciding the correction for a value of a curve (S) based on a ratio (C2/C1) of the value of the curve (C1) of the concave face to the value of the curve (C2) of the convex face of the high power plus lens or based on the value of the curve (C2) of the convex face alone of the high power plus lens according to the following equation:

$$S = 0 \qquad \text{for } a \cdot (C2/C1) \le 1$$

$$S = a \cdot (C2/C1) - 1 \quad \text{for } a \cdot (C2/C1) > 1$$

   wherein a represents an adjusting coefficient and C2/C l is 1 or greater; and d) deciding the locus of the bevel which has a second value of a curve (K2) obtained by adding the correction for the value of the curve (S) to the value (K1 of the bevel curve and passes through the reference position (m) of the bevel.

2. The method according to claim 1, wherein:

   in step b) a distance (P1) from the end of the peripheral edge at the side of the convex face in the portion having the minimum thickness (t1) to the first reference position (m) is decided as follows:

   when t1 = 2.4 mm or smaller, then P1 = (t1)/2,
   when t1 = 2.4 mm to 4.0 mm, then P1 = 1.2, and
   when t1 = 4.0 mm or greater, then P1 = (3·t1)/10.

3. An apparatus for processing a high power lens, which comprises:

a) a first means deciding a value (K1) of a bevel curve based on a first value of a curve of a concave face of the high power plus lens according to the following equation:

$$K1 = \overline{\kappa} \cdot e,$$

wherein $\overline{\kappa}$ is the average value of the curve at the concave side of the high power plus lens and the adjusting coefficient e represents a number of 1 or greater;

b) a second means deciding a reference position (m) of the bevel on a peripheral edge in a portion of the high power plus lens having a minimum thickness (t1) based on a thickness of the portion of the high power plus lens having the minimum thickness (t1);

c) a third means deciding a correction for a value of a curve (S) based on a ratio (C2/C1) of the value of the curve (C1) of the concave face to the value of the curve (C2) of a convex face of the high power plus lens or based on the value of the curve (C2) of the convex face alone of the high power plus lens according to the following equation:

S = 0 for $a \cdot (C2/C1) \leq 1$  S=$a \cdot (C2/C1)$-1 for $a \cdot (C2/C1)$>1

wherein a represents an adjusting coefficient and C2/C1 is 1 or greater;

d) a fourth means deciding the locus of the bevel which has a second value of a curve (K2) obtained by adding the correction for the value of the curve (S) to the value (K1) of the bevel curve and passes through the reference position (m) of the bevel; and

e) a fifth means forming the bevel along the locus of the bevel decided by the fourth means.

4. The apparatus according to claim 3, wherein:

the second means decides the reference position in such way that a distance (P1) from the end of the peripheral edge at the side of the convex face in the portion having the minimum thickness (t1) to the first reference position (m) is decided as follows:

when t 1 = 2.4 mm or smaller, then P1 = (t1)/2,
when t1 = 2.4 mm to 4.0 mm, then P1 = 1.2, and
when t1 = 4.0 mm or greater, then P1 = (3·t1)/10.

**Patentansprüche**

1. Verfahren zum Festlegen einer Ortskurve einer Facette bei einer Hochleistungspluslinse, die folgenden Schritte aufweisend:

a) Festlegen eines Wertes (K1) für die Facettenkurve auf Basis eines ersten Krümmungswertes einer konkaven Fläche der Hochleistungspluslinse gemäß der folgenden Gleichung:

$$K1 = \overline{\kappa} \cdot e$$

wobei $\overline{\kappa}$ der Durchschnittswert der Krümmung auf der konkaven Seite der Hochleistungspluslinse ist, und der Anpassungskoeffizient e eine Zahl von 1 oder größer darstellt;

b) Festlegen einer Bezugsposition (m) für die Facette auf einem Außenrand in einem Abschnitt der Hochleistungspluslinse mit einer minimalen Dicke (t1) auf Basis der Dicke des Abschnitts der Hochleistungspluslinse mit der minimalen Dicke (t1);

c) Festlegen der Korrektur für einen Krümmungswert (S) auf Basis eines Verhältnisses (C2/C1) des Krümmungswerts (C1) der konkaven Seite zu dem Krümmungswert (C2) auf der konvexen Seite der Hochleistungspluslinse oder allein auf Basis des Krümmungswerts (C2) der konvexen Fläche der Hochleistungslinse gemäß der folgenden Gleichung:

$$S = 0 \qquad\qquad \text{für } a \cdot (C2/C1) \leq 1$$

$$S = a \cdot (C2/C1) - 1 \qquad \text{für } a \cdot (C2/C1) > 1,$$

wobei a einen Anpassungskoeffizienten darstellt, und C2/C1 mindestens 1 ist; und
d) Festlegen der Ortskurve der Facette, die einen zweiten Krümmungswert (K2) aufweist, der durch Addieren der Korrektur für einen Krümmungswert (S) zum Wert (K1) der Facettenkurve erhalten wird, und die durch die Bezugsposition (m) der Facette hindurch geht.

**2.** Verfahren nach Anspruch 1, wobei:

in Schritt b) ein Abstand (P1) zwischen dem Ende des Außenrands auf der Seite der konvexen Fläche im Abschnitt mit der minimalen Dicke (t1) und der ersten Bezugsposition (m) wie folgt festgelegt wird:

wenn t1 = 2,4 mm oder kleiner, dann gilt: P 1 = (t1)/2,
wenn t1 = 2,4 mm bis 4,0 mm, dann gilt: P1 = 1,2, und
wenn t1 = 4,0 mm oder größer, dann gilt: P1 = (3·t1)/10.

**3.** Vorrichtung zum Bearbeiten einer Hochleistungspluslinse, aufweisend:

a) ein erstes Mittel, das einen Wert (K1) für eine Facettenkurve auf Basis eines ersten Krümmungswertes einer konkaven Fläche der Hochleistungspluslinse gemäß der folgenden Gleichung festlegt:

$$K1 = \overline{\kappa} \cdot e$$

wobei $\overline{\kappa}$ der Durchschnittswert der Kurve auf der konkaven Seite der Hochleistungspluslinse ist, und der Anpassungskoeffizient e eine Zahl von 1 oder größer darstellt;
b) ein zweites Mittel, das eine Bezugsposition (m) für die Facette auf einem Außenrand in einem Abschnitt der Hochleistungspluslinse mit einer minimalen Dicke (t1) auf Basis der Dicke des Abschnitts der Hochleistungspluslinse mit der minimalen Dicke (t1) festlegt;
c) ein drittes Mittel, das eine Korrektur für einen Krümmungswert (S) auf Basis eines Verhältnisses (C2/C1) des Krümmungswerts (C1) der konkaven Seite zu dem Krümmungswert (C2) der konvexen Seite der Hochleistungspluslinse oder allein auf Basis des Krümmungswerts (C2) der konvexen Fläche der Hochleistungslinse gemäß der folgenden Gleichung festlegt:

$$S = 0 \qquad\qquad \text{für } a \cdot (C2/C1) \leq 1$$

$$S = a \cdot (C2/C1) - 1 \qquad \text{für } a \cdot (C2/C1) > 1,$$

wobei a einen Anpassungskoeffizienten darstellt und C2/C1 mindestens 1 ist;
d) ein viertes Mittel, das die Ortskurve der Facette festlegt, die einen zweiten Krümmungswert (K2) aufweist, der durch Addieren der Korrektur für den Krümmungswert (S) zum Wert (K1) für die Facettenkurve erhalten wird, und die durch die Bezugsposition (m) der Facette hindurch verläuft; und
e) ein fünftes Mittel, das die Facette entlang der Ortskurve der Facette ausbildet, die von dem vierten Mittel festgelegt wurde.

**4.** Vorrichtung nach Anspruch 3, wobei:

das zweite Mittel die Bezugsposition auf solche Weise festlegt, dass ein Abstand (P1) zwischen dem Ende des Außenrands auf der Seite der konvexen Fläche im Abschnitt mit der minimalen Dicke (t1) und der ersten Bezugsposition (m) wie folgt festgelegt wird:

wenn t1 = 2,4 mm oder kleiner, dann gilt: P1 = (t1)/2,
wenn t1 = 2,4 mm bis 4,0 mm, dann gilt: P1 = 1,2, und
wenn t1 = 4,0 mm oder größer, dann gilt: P1 = (3·t1)/10.

**Revendications**

1. Procédé pour décider d'un lieu géométrique d'un biseau dans un verre convergent grande puissance comprenant les étapes consistant à :

   a) décider d'une valeur (K1) de la courbe en biseau en se basant sur une première valeur d'une courbe d'une face concave du verre convergent grande puissance selon l'équation suivants :

   $$K1 = \overline{\kappa} \cdot e,$$

   dans laquelle $\overline{\kappa}$ est la valeur moyenne de la courbe du côté concave du verre convergent grande puissance et le coefficient d'ajustement e représente un nombre de 1 ou plus ;
   b) décider d'une position de référence (m) du biseau sur un bord périphérique dans une portion du verre convergent grande puissance ayant une épaisseur minimale (t1) en se basant sur une épaisseur de la portion du verre convergent grande puissance ayant l'épaisseur minimale (t1) ;
   c) décider de la correction pour une valeur d'une courbe (S) en se basant sur un rapport (C2/C1) entre la valeur de la courbe (C1) de la face concave et la valeur de la courbe (C2) de la face convexe du verre convergent grande puissance ou en se basant sur la valeur de courbe (C2) de la face convexe seule du verre convergent grande puissance selon l'équation suivants :

   $$S = 0 \qquad\qquad \text{pour } a \cdot (C2/C1) \leq 1$$

   $$S = a \cdot (C2/C1) - 1 \qquad\qquad \text{pour } a \cdot (C2/C1) > 1$$

   où a représente un coefficient d'ajustement et C2/C1 vaut 1 ou plus ; et
   d) décider du lieu géométrique du biseau qui a une seconde valeur d'une courbe (K2) obtenue en ajoutant la correction pour la valeur de la courbe (S) à la valeur (K1) de la courbe en biseau et passe par la position de référence (m) du biseau.

2. Procédé selon la revendication 1, dans lequel :

   dans l'étape b), une distance (P1) de l'extrémité du bord périphérique du côté de la face convexe dans la portion ayant l'épaisseur minimale (t1) à la première position de référence (m) est décidée comme suit :

   lorsque t1 = 2,4 mm ou moins, alors P1 = (t1)/2
   lorsque t1 = 2,4 mm à 4,0 mm, alors P1 = 1,2 et
   lorsque t1 = 4,0 mm ou plus, alors P1 = (3·t1)/10.

3. Appareil de traitement d'un verre grande puissance, qui comprend :

   a) un premier moyen décidant d'une valeur (K1) d'une courbe en biseau en se basant sur une première valeur d'une courbe d'une face concave du verre convergent grande puissance selon l'équation suivants :

$$K1 = \overline{\kappa} \cdot e,$$

dans laquelle $\overline{\kappa}$ est la valeur moyenne de la courbe du côté concave du verre convergent grande puissance et le coefficient d'ajustement e représente un nombre de 1 ou plus ;

b) un deuxième moyen décidant d'une position de référence (m) du biseau sur un bord périphérique dans une portion du verre convergent grande puissance ayant une épaisseur minimale (t1) en se basant sur une épaisseur de la portion du verre convergent grande puissance ayant l'épaisseur minimale (t1) ;

c) un troisième moyen décidant d'une correction pour une valeur d'une courbe (S) en se basant sur un rapport (C2/C1) entre la valeur de la courbe (C1) de la face concave et la valeur de la courbe (C2) d'une face convexe du verre convergent grande puissance ou en se basant sur la valeur de la courbe (C2) de la face convexe seule du verre convergent grande puissance selon l'équation suivante :

$$S = 0 \qquad \text{pour } a \cdot (C2/C1) \le 1$$

$$S = a \cdot (C2/C1) - 1 \qquad \text{pour } a \cdot (C2/C1) > 1$$

où a représente un coefficient d'ajustement et C2/C1 vaut 1 ou plus ;

d) un quatrième moyen décidant du lieu géométrique du biseau qui a une seconde valeur d'une courbe (K2) obtenue en ajoutant la correction pour la valeur de la courbe (S) à la valeur (K1) de la courbe en biseau et passe par la portion de référence (m) du biseau ; et

e) un cinquième moyen formant le biseau le long du lieu géométrique du biseau décidé par le quatrième moyen.

4. Appareil selon la revendication 3, dans lequel :

le deuxième moyen décide de la position de référence de telle sorte qu'une distance (P1) de l'extrémité du bord périphérique du côté de la face convexe dans la portion ayant l'épaisseur minimale (t1) à la première position de référence (m) est décidée comme suit :

lorsque t1 = 2,4 mm ou moins, alors P1 = (t1)/2
lorsque t1 = 2,4 mm à 4,0 mm, alors P1 = 1,2 et
lorsque t1 = 4,0 mm ou plus, alors P1 = (3·t1)/10.

# FIG. 1

# FIG. 2

FIG. 3

# FIG. 4

START
↓
OBTAINING DATA OF THE SHAPE OF THE LENS FRAME — S1
↓
HOLDING THE LENS — S2
↓
OBTAINING THE LAYOUT INFORMATION — S3
↓
OBTAINING LENS DATA — S4
↓
SELECTING THE LENSTYPE — S5
↓
MEASUREMENT — S6

S7  S72  S73  S74  S75

S71

| DECIDING A LOCUS OF A BEVEL IN AN EX LENS | DECIDING A LOCUS OF A BEVEL IN A HIGH POWER MINUS LENS | DECIDING A LOCUS OF A BEVEL IN A LENTICULAR LENS | DECIDING A LOCUS OF A BEVEL IN A HIGH POWER PLUS LENS | DECIDING A LOCUS OF A BEVEL IN A REGULAR LENS |

↓
DISPLAYING A SAMPLE OF THE CONDITION SET FOR THE BEVEL — S8
↓
GRINDING IN THE ROUGH PROCESSING — S9
↓
BEVEL PROCESSING — S10
↓
RETURN

# FIG. 5

IN THE CASE OF AN EX LENS

```
         ( S6 )
           │
           ▼
┌─────────────────────────────┐
│ DECIDING THE VALUE OF THE BEVEL CURVE │ ─ S711
│ BASED ON THE VALUE OF THE CURVE OF    │
│        THE CONCAVE FACE               │
└─────────────────────────────┘
           │
           ▼
┌─────────────────────────────┐
│ DECIDING THE INITIAL REFERENCE AXIS   │ ─ S712
│        OF THE BEVEL CURVE             │
└─────────────────────────────┘
           │
           ▼
┌─────────────────────────────┐
│ DECIDING THE REFERENCE POSITION       │ ─ S713
│         OF THE BEVEL                  │
└─────────────────────────────┘
           │
           ▼
┌─────────────────────────────┐
│ OBTAINING THE VALVE OF CORRECTION FOR │ ─ S714
│  THE REFERENCE AXIS OF A CURVE        │
└─────────────────────────────┘
           │
           ▼
┌─────────────────────────────┐
│ CALCULATING THE ANGLE OF INCLINATION  │ ─ S715
│         OF THE AXIS                   │
└─────────────────────────────┘
           │
           ▼
┌─────────────────────────────┐
│ DECIDING THE LOCUS OF THE BEVEL       │ ─ S716
└─────────────────────────────┘
           │
           ▼
         ( S8 )
```

─S71

# FIG. 6

IN THE CASE OF A HIGH POWER MINUS LENS

S6

DECIDING THE VALUE OF THE BEVEL CURVE BASED ON THE VALUE OF THE CURVE OF THE CONVEX FACE — S721

DECIDING THE INITIAL REFERENCE AXIS OF THE BEVEL CURVE — S722

DECIDING THE REFERENCE POSITION OF THE BEVEL — S723

OBTAINING THE VALUE OF CORRECTION FOR THE REFERENCE AXIS OF A CURVE — S724

CALCULATING THE ANGLE OF INCLINATION OF THE AXIS — S725

DECIDING THE LOCUS OF THE BEVEL — S726

S72

S8

# FIG. 7

IN THE CASE OF A LENTICULAR LENS

S6

DECIDING THE VALUE OF THE BEVEL CURVE BASED ON THE VALUE OF THE CURVE OF CONCAVE FACE — S731

DECIDING THE REFERENCE POSITION OF THE BEVEL — S732

DECIDING THE CORRECTION FOR THE VALUE OF THE CURVE — S733

DECIDING THE LOCUS OF THE BEVEL — S734

S73

S8

# FIG. 8

IN THE CASE OF A HIGH POWER PLUS LENS

S6

DECIDING THE VALUE OF THE BEVEL CURVE BASED ON THE VALUE OF THE CURVE OF THE CONCAVE FACE — S741

DECIDING THE REFERENCE POSITION OF THE BEVEL — S742

DECIDING THE CORRECTION FOR THE VALUE OF THE CURVE — S743

DECIDING THE LOCUS OF THE BEVEL — S744

S74

S8

# FIG. 9

91

913

911 — SETTING THE BEVEL | LAYOUT DISPLAY | RIGHT EYE

PLASTIC 1
METAL FRAME

EX

FRAME TRACE FOR THE RIGHT
EYE OR FOR THE LEFT EYE

912 —
FPD 67.3
PD 64.0
Y 0.0
AX 180
SIZE 0.0
MINIMUM DIAMETER 58
ANGLE 142
FC 4.3

# FIG. 10

# FIG. 11

FIG. 12

FIG. 13

**EP 2 052 814 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0899059 A2
- EP 0479683 A2

- US 20010035933 A1